Europäisches Patentamt

European Patent Office

Office européen des brevets

(19)

(11) Veröffentlichungsnummer: **0 503 704 A2**

# EUROPÄISCHE PATENTANMELDUNG

(12)

(21) Anmeldenummer: **92200538.4**

(51) Int. Cl.[5]: **H01R 9/26**, H04Q 1/14

(22) Anmeldetag: **19.02.92**

(30) Priorität: **05.03.91 DE 9102615 U**
**03.08.91 DE 9109639 U**

(43) Veröffentlichungstag der Anmeldung:
**16.09.92 Patentblatt 92/38**

(84) Benannte Vertragsstaaten:
**PT**

(71) Anmelder: **OUANTE AG**
**Uellendahler Strasse 353**
**W-5600 Wuppertal 1(DE)**

(72) Erfinder: **Otto, Hans Dieter, Dipl.-Ing.**
**Breslauer Strasse1 a**
**W-4272 Wipperfürth(DE)**
Erfinder: **Kübelstein, Ralf, Dipl.-Ing.**
**P. Loebestrasse 31 c**
**W-5600 Wuppertal 1(DE)**
Erfinder: **Weldert, Günter**
**Steinweg 16**
**W-5600 Wuppertal 2(DE)**

(74) Vertreter: **Mentzel, Norbert**
**Postfach 20 02 10, Unterdörnen 114**
**W-5600 Wuppertal 2(DE)**

(54) **Tragprofil für Anschluss- und/oder Trennleisten in der Telekommunikationstechnik.**

(57) Ein Tragprofil (10) mit U-förmigem Querschnitt dient zur Montage von Anschluß- und/oder Trenn-Leisten, an welchen Kabeladern elektrisch kontaktiert werden. Dieser U-Querschnitt besitzt U-Schenkel (11), die zum Führen und Halten der Leisten mit Laschen (14) versehen sind sowie Anschläge (16) zur Höhenabstützung der Leisten besitzen. Für eine einfache und schnelle Herstellung des Tragprofils in beliebiger Länge wird vorgeschlagen, in einem Längenabstand (23), der dem Einfachen oder Vielfachen des Stanzmusterrapports der späteren U-Schenkel und U-Stege entspricht, einen Querspalt (20) im Tragprofil (10) einzustanzen. Der Querspalt (20) durchtrennt den einen U-Schenkel (11) bis zum Mittelsteg (13) zwischen aufeinanderfolgenden Biegeabschnitten, die nur abschnittweise, jeweils selbständig für sich, zum U-Querschnitt fertig abgekantet werden. Im Endbereich des einen Biegeabschnitts wird eine Werkstoffbrücke (30) aus dem Material des Tragprofils mit ausgeschnitten. Die Werkstoffbrücke (30) geht vom freigeschnittenen U-Schenkel (11) des einen Biegeabschnitts aus, durchsetzt den Querspalt (20) und ist mit ihrem freien Brückenende (32) am Schenkel (11) des benachbarten Biegeabschnitts verankert. Dadurch sind die beiden voneinander unabhängig abgekanteten Biegeabschnitte miteinander verbunden und bilden ein fortlaufendes Tragprofil (10) mit U-förmigem Querschnitt.

FIG.3

EP 0 503 704 A2

Die Erfindung richtet sich auf ein Tragprofil der im Oberbegriff des Anspruches 1 angegebenen Art. Ein solches Tragprofil kann, in einem Anwendungsfall, als Tragschiene zur Montage lediglich des einen Endes einer Reihe von Anschluß- oder Trennleisten verwendet werden oder aber, in einem anderen Anwendungsfall, als U-förmig profilierte Wanne ausgebildet sein, um an ihren beiden U-Schenkeln gleichzeitig beide Enden derartiger Leisten zu haltern.

Die bekannte Herstellung solcher Tragprofile (vergleiche deutsche Offenlegungsschrift 28 11 812) war verhältnismäßig zeit- und kostenaufwendig. Es wurden aus einem Bandmaterial durch ein Folgeverbundwerkzeug zunächst kantenseitige Konturen und ggf. Ausschnitte ausgestanzt, woraus sich ein Halbfabrikat ergab. Dieses Halbfabrikat wurde in Teillängen geschnitten, die der maximalen Länge einer dann zum Einsatz kommenden Kantmaschine entsprach. Diese Teillängen des Halbfabrikats wurden auf dieser gesonderten Kantmaschine mit in Band-Längsrichtung verlaufenden Abkantungen versehen. Dann entstand erst das fertige Tragprofil mit U-förmigem Querschnitt, allerdings nur in den Teillängen des dabei benutzten Halbfabrikats. Diese Teillängen mußten entsprechend der später benötigten Länge der Tragschiene bzw. Tragwanne gestaltet sein. Die Herstellung dieser bekannten Profile auf zwei Maschinen war teuer. Ferner war eine umfangreiche Lagerhaltung von Tragschienen bzw. Tragwannen unterschiedlicher Länge erforderlich, weil auf der Kantmaschine keine beliebig langen kontinuierlichen Tragprofile hergestellt werden konnten.

Der Erfindung liegt die Aufgabe zugrunde, ein universelles Tragprofil der im Oberbegriff des Anspruches 1 genannten Art zu entwickeln, das sich einfacher und preiswerter herstellen läßt. Dies wird erfindungsgemäß durch die im Kennzeichen des Anspruches 1 angeführten Maßnahmen erreicht, denen folgende besondere Bedeutung zukommt:

Durch die Querspalte im Tragprofil, die entsprechend dem Rastermaß in der Stanzfolge beabstandet sind, ist es möglich, das Bandmaterial in einem mehrstufigen Arbeitsgang auf ein und derselben Maschine bis zum fertigen Tragprofil mit dem gewünschten U-Querschnitt in beliebiger kontinuierlicher Länge zu fertigzustellen. Auf dieser einzigen Maschine werden fortlaufend nicht nur die Stanzausschnitte und die Kontur der späteren U-Schenkel, sondern zugleich die längsgerichteten U-Abkantungen ausgeführt, weshalb am Ausgang der Maschine das fertige Tragprofil mit seinem U-Querschnitt erscheint. Eine Behandlung von Halbfabrikaten auf weiteren Abkantmaschinen entfällt. Die Erfindung zeichnet sich durch die besondere Verfahrensweise aus, daß die U-Abkantung in Längsrichtung des Profils abschnittweise, zwischen den vorbereiteten Querspalten, erfolgt, in die das Bandmaterial in der ersten Stufe des Arbeitsgangs zunächst gegliedert wird. Im Zuge des schrittweisen Vorschubs des Bandmaterials beim Stanzen werden dann, an einer nachfolgenden Stelle der gleichen Maschine, die einzelnen Abschnitte des bearbeiteten Streifens nacheinander zur fertigen Tragschiene abgekantet. Für die Abkantung genügt es, den Querspalt lediglich in den beiden U-Schenkeln bis in den Übergang des angrenzenden U-Mittelstegs, gemäß Anspruch 2, oder an einem der beiden U-Schenkel und dem angrenzenden Mittelsteg, gemäß Anspruch 15, verlaufen zu lassen. Der Zusammenhalt im endgültigen Tragprofil erfolgt durch die im Anspruch hervorgehobenen Werkstoffbrücken, die vorausgehend aus dem Material des Tragprofils als Zungen, gemäß Anspruch 2, oder als Stege, gemäß Anspruch 15, herausgeschert werden. Die Werkstoffbrücken ermöglichen die abschnittweisen U-Abkantungen und werden mit ihren freien Brückenenden in der letzten Stufe des Arbeitsganges an den U-Schenkeln des benachbarten Abschnitts des Tragprofils verbunden. Wie die Praxis zeigte, kommt man mit lediglich einer solchen Brücke pro Querspalt aus. Man erhält dadurch Tragprofile beliebig großer Längen, die dann bedarfsweise in die gewünschten Längen der Tragschienen oder Tragwannen geschnitten werden können. Als Schnittstelle bietet sich, gemäß Anspruch 24, der Ort eines solchen Querspalts an.

Wie bereits erwähnt wurde, besteht eine Möglichkeit gemäß Anspruch 15 darin, die Werkstoffbrücken aus einem gestreckten Steg auszubilden, der von der einen Grenzkante des Querspalts ausgeht, die den einen Biegeabschnitt von dem benachbarten Biegeabschnitt scheidet. Das freie andere Stegende greift in eine komplementäre Aufnahme des benachbarten Biegeabschnitts ein, wodurch ein formschlüssiger Eingriff entsteht. Der Eingriff des freien Stegendes mit der Aufnahme kann zwar durch Klebung oder Schweißung gesichert sein, wie es der Anspruch 11 vorsieht, doch ist es für eine solche Sicherung einfacher, eine Deformation im Fugenbereich entsprechend Anspruch 16 vorzusehen. Bewährt haben sich dabei keilförmige Nut-Feder-Verbindungen in der Ebene des Querspalts. Sofern die Eingriffssicherung durch Prägen, gemäß Anspruch 16, erfolgt, kann es zu einer Verdrängung von Material kommen, was den gewünschten geradlinigen Verlauf des erlangten kontinuierlichen Tragprofils stören könnte.

Günstiger ist es daher, die Werkstoffbrücke aus einer umfaltbaren Zunge gemäß Anspruch 2 auszubilden, die im fertigen Tragprofil zu einer Überlappung des Zungenendes mit dem U-Schenkel des benachbarten Biegeabschnitts führt. Die Befestigung eines solchen umgefalteten Zungenendes an der Überlappungsstelle erfolgt senkrecht zur Ebene des U-Schenkels, weshalb es dann nicht zu Längenänderungen im Schenkelbereich kommt. Ein solches Tragprofil zeichnet sich durch eine exakte Geradlinigkeit aus. Als Befestigung kann man zwar, gemäß Anspruch 11, eine Schweißung, eine Klebung vornehmen, doch ist es einfacher, eine Werkstoffverformung, wie eine Nietung nach Anspruch 12 vorzusehen, die ebenfalls auf ein und derselben Maschine ausgeführt werden kann.

Weitere Maßnahmen und Vorteile der Erfindung ergeben sich aus den Unteransprüchen, aus der nachfolgenden Beschreibung und aus den Zeichnungen. Dort ist die Erfindung anhand von zwei Ausführungsbeispielen in verschiedenen Arbeitsstufen ihrer besonderen Herstellung verdeutlicht. Es zeigen:

| | |
|---|---|
| Fig. 1 | in Verkleinerung die Draufsicht auf ein Teilstück des als Tragwanne ausgebildeten Tragprofils gemäß der Erfindung, |
| Fig. 2 | eine Querschnittansicht durch die Tragwanne von Fig. 1 längs der Schnittlinie II-II, |
| Fig. 3 und 4 | in etwa natürlicher Größe die äußere Seitenansicht in Blickrichtung des Pfeils III von Fig. 1 bzw. die innere, längs der Schnittlinie IV-IV gesehene Seitenansicht auf die Tragwanne von Fig. 1, |
| Fig. 5 | in einer der Fig. 3 entsprechenden Darstellung die Tragwanne in einer vorausgehenden Arbeitsstufe, |
| Fig. 6 | in Vergrößerung eine Schnittansicht durch einen Schenkelbereich der erfindungsgemäßen Wanne in ihrer vorausgehenden Arbeitsstufe längs der Schnittlinie VI-VI von Fig. 5, |
| Fig. 7 | in einer der Fig. 6 entsprechenden Darstellung den gleichen Bereich der Tragwanne nach vollzogener letzter Arbeitsstufe, |
| Fig. 8 | in weiterer stärkerer Vergrößerung eine Detailansicht des Befestigungsbereichs von Fig.7, |
| Fig. 9 | in einer der Fig. 7 entsprechenden Darstellung eine Schnittansicht durch den Schenkelbereich einer Wanne längs der Schnittlinie IX-IX von Fig. 3, die bereichsweise durch einen in der Tragwanne vorgesehenen, versprungenen Querspalt geführt ist, |
| Fig.10 | die Seitenansicht auf ein teilweise ausgebrochenes, als Tragschiene ausgebildetes Tragprofil gemäß der Erfindung, |
| Fig.11 | eine Draufsicht auf das Profil von Fig. 10, |
| Fig.12 und 13 | Querschnitte durch die Tragschiene längs der Schnittlinien XII-XII bzw. XIII-XIII von Fig. 10, |
| Fig.14 | eine längs der Schnittlinie XIX-XIV von Fig. 10 ausgeführte Querschnittansicht durch die Tragschiene, wenn dort eine Anschlußleiste für Kabel-Adern montiert ist, die lediglich in einem Ausbruch gezeigt ist, und |
| Fig.15 | einen Längsschnitt durch ein Teilstück der Tragschiene längs der Schnittlinie XV-XV von Fig. 14. |

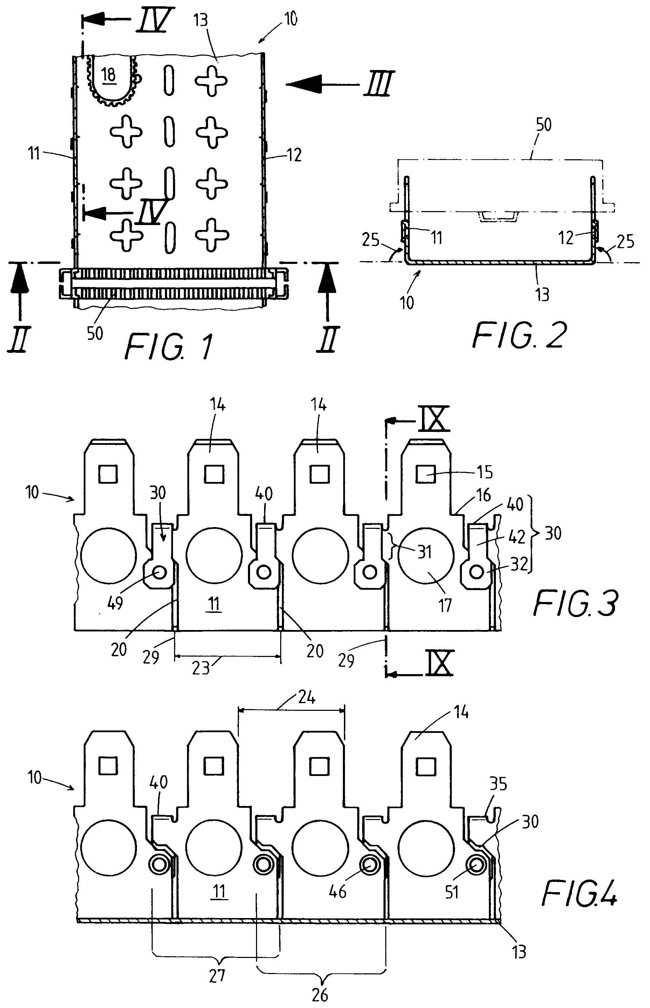

Die Tragwanne 10, gemäß Fig. 1 bis 9, besitzt einen U-förmigen Querschnitt mit zwei zueinander spiegelbildlich gleich ausgebildeten U-Schenkeln 11, 12, die durch einen Mittelsteg 13 miteinander verbunden sind. Die U-Schenkel 11, 12 dienen zur Halterung einer Anschlußleiste 50 und besitzen dazu einen Stufenumriß, der Laschen 14 entstehen läßt. Die Laschen 14 besitzen Rastöffnungen 15, die im Montagefall mit entsprechenden Rastzungen einer zugehörigen Anschlußleiste 50 zusammenwirken. Im Fußbereich besitzen die Laschen 14 Anschläge 16, die zur Höhenabstützung der montierten Anschlußleiste 50 dienen. Im darunter liegenden Bereich weisen die U-Schenkel 11, 12 einen Durchbruch 17 zum Ein- oder Ausführen von Kabel-Adern auf. Ebenso kann der U-Mittelsteg 13 der Tragwanne 10 mit einem Langloch 18 versehen sein, dessen Kanten durch eine Kunststoff-Randeinfassung entschärft sind.

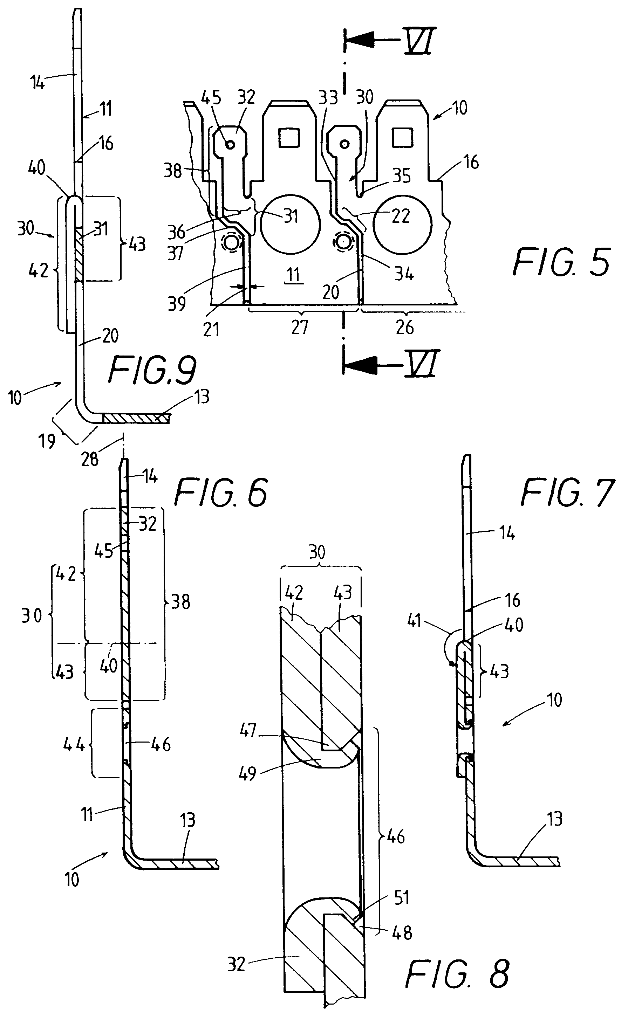

Von besonderer Bedeutung ist, daß die Tragschiene 10 von Querspalten 20 durchsetzt ist, die, wie aus Fig. 5 und 9 erkennbar ist, in jedem Fall die ganze Länge der U-Schenkel 11 bzw. 12 durchziehen, sich aber auch im Übergang 19 bis in den Anfangsbereich des angrenzenden U-Mittelstegs 13 erstrecken. Im vorliegenden Fall sind aufeinanderfolgende Querspalte 20 in einem Längenabstand 23 angeordnet, der dem Stanzmusterrapport 24 genau entspricht. Der Rasterschritt 29 bei der Arbeitsfolge zur Herstellung der Tragwanne 10 aus einem Bandmaterial auf einem nicht näher gezeigten Folgeverbundwerkzeug beginnt an der durch die Schnittlinie IX-IX gekennzeichneten und z. B. mit 29 bezeichneten Stelle in der Querspalt-Mitte. Die Längenabstände 23 können auch ein ganzzeiliges Vielfaches des Stanzmusterrapports 24 betragen. Der Stanzmusterrapport 24 bestimmt das Rastermaß 24, um welches das Bandmaterial zwischen seinen aufeinanderfolgenden Stationen schrittweise weiterbewegt wird. Dazu besitzt das Bandmaterial Transportlöcher für Positionsgeber des Folgeverbundwerkzeugs.

Dabei werden die bereits erwähnten Ausschnitte 15, 17 und die Umrißkonturen der U-Schenkel 11, 12 ausgeführt, zu denen eine besondere, aus Fig. 5 ersichtliche Ausgangslage der Zungen 30 gehört. Ebenso werden die Querspalte 20 in das Bandmaterial eingeschnitten, die zwar eine im wesentlichen gleichförmige lichte Spaltweite 21 haben, aber in Längsrichtung der Tragwanne 10 einen stufenartigen Versprung 22 aufweisen. Wie aus Fig. 5 hervorgeht, bildet die äußere Zungenkante 33 hinter dem Versprung 22 zugleich die eine Grenzkante des Querspalts 20. Die Besonderheit des erfindungsgemäßen Verfahrens liegt nun darin, daß im Zuge solcher Profilierungen und Ausstanzungen des Bandmaterials zugleich die den späteren U-Querschnitt der Tragwanne bestimmende, aus Fig. 2 ersichtliche Längsabkantungen 25 der U-Schenkel 11, 12 abschnittweise erfolgen. Diese Abschnitte 26, 27 sollen wegen der in ihnen selbständig erfolgenden U-Biegung nachfolgend kurz "Biegeabschnitte" bezeichnet werden. Fig. 5 zeigt dabei eine Vor-Fertigungsstufe im Zuge der Wannenherstellung, auf die hinsichtlich der Zunge 30 nun näher einzugehen ist.

Die Zunge 30 verläuft zunächst, gemäß Fig. 5 und 6, gestreckt in der strichpunktiert veranschaulichten Schenkelebene 28, was für jeden der beiden U-Schenkel 11, 12 gilt. Es genügt daher, nur den einen U-Schenkel 11 in seinem Aufbau und seiner Wirkungsweise zu beschreiben. Die gestreckte Zunge 30 besteht aus einem gleichförmigen Streifen, der am Zungenende 32 in ein verbreitertes, zur späteren Befestigung dienendes Kopfstück übergeht. Die Zunge 30 erstreckt sich zunächst in Verlaufsrichtung des zugehörigen U-Schenkels 11 und sitzt jeweils an der Endkante 34 eines jeden Biegeabschnitts 26, 27. Die Ansatzstelle 31 der Zunge 30 ist somit ein Teilstück dieser Abschnitts-Endkante 34. Von der Ansatzstelle 31 aus springt ein Zungen-Anfangsstück 36 in Längsrichtung der Tragwanne 10 vor und der benachbarte Biegeabschnitt 26, 27 besitzt jeweils einen entsprechenden Ausschnitt 37 an seiner Anfangskante 39, so daß dazwischen der bereits erwähnte stufenartige Versprung 22 des Querspalts 20 entsteht. Dieses Zungen-Anfangsstück 36 verläuft geneigt zur Längsrichtung der Tragwanne 10 und setzt sich in einem dann folgenden Zungen-Hauptstück fort, das gegenüber dem Anfangsstück 36 abgewinkelt verläuft. Das Hauptstück 38 der gestreckten Zunge 30 erstreckt sich in Verlaufsrichtung des zugehörigen U-Schenkels 11 und ist gegenüber der angrenzenden Lasche 14 durch einen Einschnitt 35 getrennt. Der Einschnitt 35 begrenzt die Innenkante im Fußbereich der Zunge und ist vom zugehörigen Querspalt 20 abgekehrt.

In der darauffolgenden Arbeitsstufe im Folgeverbundwerkzeug wird nun die Zunge 30 an einer Knickstelle 40 im Sinne des Faltpfeils 41 von Fig. 7 umgelegt, wodurch an der Zunge zwei bereichsweise übereinanderliegende Zungenabschnitte 42, 43 in der umgefalteten Zunge 30 gemäß Fig. 3 und 7 entstehen. Die Faltung 41 erfolgt im vorliegenden Fall nach außen, so daß das freie Zungenende 32 an der Außenfläche 44 des zum benachbarten Biegeabschnitt 27 gehörenden U-Schenkels 11 zur Anlage kommt. Der an der Ansatzstelle 31 befindliche eine Zungenabschnitt 43 bleibt dabei in der Schenkel-Ebene 28, während der hinter der Knickstelle 40 liegende andere Zungenabschnitt 42 demgegenüber um die Materialstärke der Zunge 30 nach außen versetzt ist. Es kommt zu einer Überlappung des Zungenendes 32 mit der Berührungsstelle 44. Hier erfolgt eine besondere Befestigung in Form einer Vernietung, die in folgender Weise in der vorausgehenden Arbeitsstufe von Fig. 5 und 6 vorbereitet und in der Endfertigungsstufe gemäß Fig. 7 und 8 vervollständigt wird.

Das verbreiterte Zungenende 32 ist mit einer Vorlochung 45 an der für die Nietung vorgesehenen Stelle versehen, während im künftigen Anlagebereich 44 des Zungenendes 32 eine Nietöffnung 46 im U-Schenkel 11 bzw. 12 des jeweils benachbarten Biegeabschnitts 26 bzw. 27 vorgesehen ist. Die Nietöffnung 46 ist dabei konisch ausgebildet und besitzt eine Innenschräge 47, nach der sich die Nietöffnung 46 zu einer Trichteröffnung 48 vergrößert. Nach dem Umfalten 41 des Zungenabschnitts 42 wird das Material im Bereich der Vorlochung 45 zu einem Hohlniet 49 ausgeformt, der in die Nietöffnung 46 eindringt, an seinem Schaftende zu einer Umbördelung 51 deformiert wird und mit der Umbördelung 51 die Innenschräge 47 hintergreift. Die am Nietschaftende entstehenden Umbördelungen 51 liegen, wie aus Fig. 7 und 8 zu erkennen ist, im Schutz der Trichteröffnung 48 des U-Schenkels 11 bzw. 12 und springen somit nicht im Inneren der Tragwanne 10 störend vor. Am Zungenende 32 ist somit eine Befestigungsstelle 51 der Zunge 30 entstanden, die eine feste Verbindung zwischen den beiden, vorausgehend jeweils für sich abgekanteten Biegeabschnitten 26, 27 erzeugt. Die Zunge 30 stellt eine unlösbare Brücke zwischen den beiden Biegeabschnitten 26, 27 her. Es entsteht im Überlappungsbereich 42, 44 ein Formschluß 48, 49, 51, der durch eine senkrecht zur Schenkelebene 28 ausgeübte Kraft entsteht. Es fällt keine Kraftkomponente in der Schenkelebene 28 an, die zu Längenänderungen führen könnte. Die fertige Tragwanne 10 besitzt daher einen einwandfreien, krümmungsfreien, exakt geradlinigen Längsverlauf. Die Nietöffnung könnte statt eines Konus auch ein anderes Öffnungsprofil aufweisen.

Wie schon erwähnt wurde, kann das Abkanten 41, 42 auch in einem mehrfachen Rastermaß 23 über mehrere Stanzmusterrapporte 24 hinweg erfolgen, weshalb dann die Querspalte 20 und die Zungen 30 in entsprechend doppeltem oder mehrfachen Längsabstand 23 liegen. Die Tragwanne 10 kann in beliebig großen Längen hergestellt werden. Entsprechend den individuellen Bedürfnissen läßt sie sich dann ablängen, was vorteilhaft unter Ausnutzung der bereits vorgesehenen Querschlitze 20 erfolgt. Diese auf das gewünschte Maß gebrachten Tragwannen 10 sind nun zur Montage bereit und können mit den Anschlußleisten 50 in bekannter Weise bestückt werden. Die vorerwähnten Knickstellen 40 der umgefalteten Zungen 30 sollten unterhalb bzw. höchstens höhengleich mit den bereits eingangs erwähnten Anschlägen 16 an den beiden U-Schenkeln 11 bzw. 12 zur Höhenabstützung der Anschlußleisten 50 angeordnet sein.

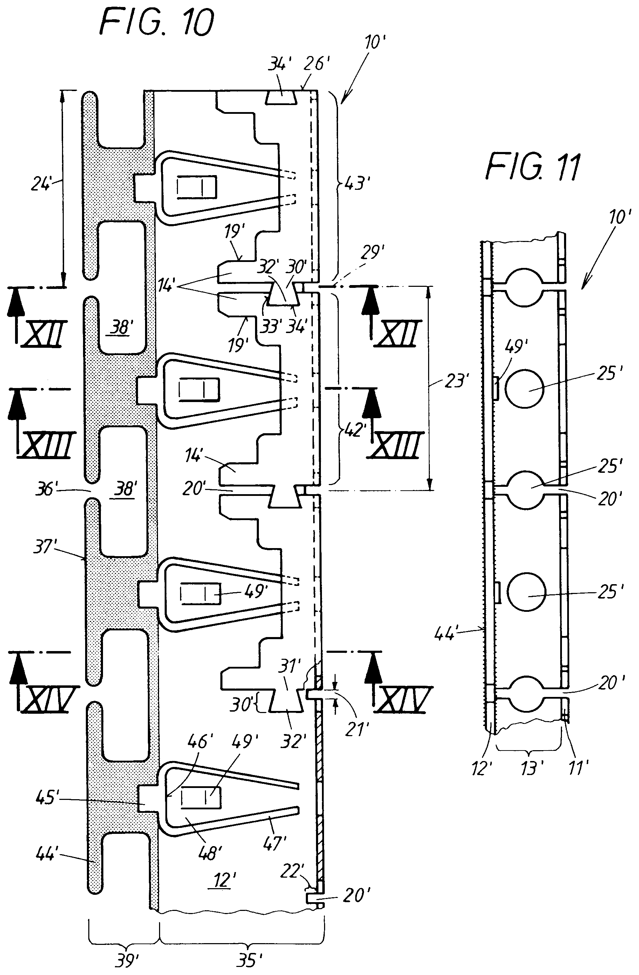

Auch die in Fig. 10 bis 15 gezeigte Tragschiene 10' besitzt einen U-förmigen Querschnitt. Hier sind die beiden U-Schenkel 11', 12' zueinander unterschiedlich lang ausgebildet, durch einen U-Mittelsteg 13' miteinander verbunden und haben zueinander unterschiedliche Aufgaben zu erfüllen. Die beiden U-Schenkel 11', 12' sind daher mit zueinander unterschiedlichen Konturen und Ausstanzungen versehen, die in eine Wechselbeziehung mit den daran zu montierenden Anschlußleisten 50' treten.

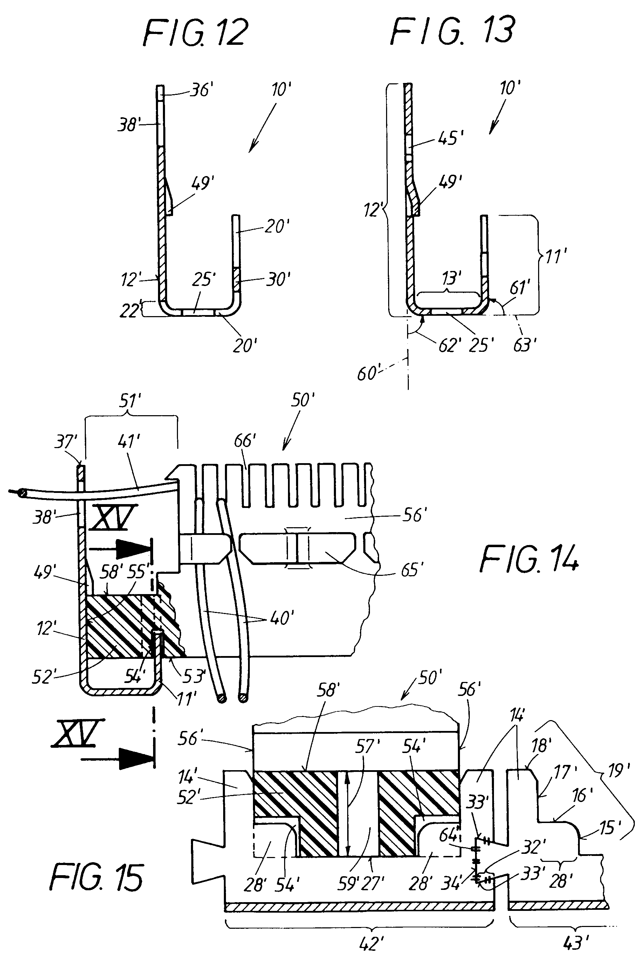

Dazu ist der kurze U-Schenkel mit einem doppelten Stufenumriß 19' versehen, bestehend aus einem inneren bzw. äußeren Stufenstoß 15', 17' sowie einem inneren bzw. äußeren Stufentritt 16', 18'. Es entsteht somit eine innere Stufe 15', 16' und eine äußere Stufe 17', 18'. Diese Laschen 14' sind in einer zugleich die Schnittlinie XII-XII bestimmenden längsmittigen Querschnittebene 29' von Fig. 10 zueinander spiegelbildlich symmetrisch gestaltet, besitzen also einen ansteigenden sowie abfallenden Stufenumriß 19'. Auch diese Tragschiene 10' ist von Querspalten 20' durchsetzt, die aber hier den kurzen U-Schenkel 11' sowie den U-Mittelsteg 13' durchziehen, sich aber auch im Fußbereich 22' des angrenzenden langen U-Schenkels erstrecken, wie am besten aus Fig. 12 hervorgeht. Dieser Querspalt 20' verläuft mittig durch die Lasche 14' und gliedert diese in zwei, entsprechend der Spaltweite 21' voneinander beabstandete Laschenhälften. Wegen des symmetrischen ansteigenden und abfallenden Stufenumrisses 19' sind auch die beiden Laschenhälften in ihren äußeren Konturen zueinander spiegelbildlich gleich gestaltet, wenn auch in ihrem inneren Aufbau noch näher zu beschreibende Formunterschiede vorliegen. Durch den Querspalt 20' wird der Stufentritt 18' der äußeren Stufe der Gesamtlasche 14' halbiert. Im vorliegenden Fall sind aufeinanderfolgende Querspalte 20' in einem Längenabstand 23' zueinander angeordnet, der dem Stanzmusterrapport 24' genau entspricht, insbesondere beginnt der Rasterschritt 29' bei der Arbeitsfolge zur Herstellung der Tragschiene 10' aus einem entsprechenden Bandmaterial an der durch die erwähnte Querschnittebene 29' in der Mitte des Querspalts 20' gekennzeichneten Stelle. Dazu besitzt das Bandmaterial Kantenstufen mit Transportlöchern für Positionsgeber in der Maschine. Der Längenabstand 23' könnte aber auch ein ganzzeiliges Vielfaches dieses Rapports 24' betragen. Das Stanzmuster umfaßt in jedem Rapport 24' noch folgende weiteren Musterelemente.

Der U-Mittelsteg 13' besitzt eine Schar von Befestigungslöchern 25', die zur Anbringung der Tragschiene 10' an nicht näher gezeigten Abschluß- oder Verteilereinrichtungen für elektrische Kabel-Adern 40', 41' dienen, und zwar sind hier in jedem Stanzmusterrapport 24' zwei solcher Befestigungslöcher vorgesehen, von denen jeweils eines 25' mittig vom zugehörigen Querspalt 20' durchsetzt wird. Der lange U-Schenkel 12 umfaßt in seiner Randzone 39' aufeinanderfolgende Rangieröffnungen 38', die zu seiner freien Scheitelkante 37' hin einen Schlitz 36' aufweisen, der zum Ein-bzw. Ausführen der am besten aus Fig. 14 ersichtlichen abgehenden Kabel-Adern 41' dient. Zur Schonung der Kabeladern 41' ist die ganze Randzone 39' um die Rangieröffnungen 38' herum mit einer Kunststoffbeschichtung 44' versehen, die in Fig. 10 und 11 gepunktet veranschaulicht ist. Die Anordnung innerhalb des Stanzmusterrapports 24' ist dabei so gewählt, daß dieser Schlitz 36' mit dem Querspalt 20' ausgerichtet ist. In der an die Randzone 39' angrenzenden Schenkelzone 35' sind besondere Rastmittel eingeformt, die in einer noch näher im Zusammenhang mit Fig. 14 zu schildernden Weise mit der Anschlußleiste 50' zusammenwirken.

Diese Rastmittel bestehen aus einer Federzunge 49', die aus dem Bandmaterial ausgestanzt ist, und zwar, gegen den U-Mittelabschnitt 13' der Tragschiene 10' hin gerichtet ist. Um die Elastizität zu erhöhen, ist aber die Federzunge 49' durch einen gegenläufig angeordneten Lappen 48' fortgesetzt, der ebenfalls aus dem Material des langen U-Schenkels 12' mit ausgeformt ist und dessen Verbindung dem U-Mittelsteg 13' zugekehrt ist. Die Federzunge 49' befindet sich im Inneren des vom Stanzschnitt 47' des Lappens 48' umgrenzten Bereich, und zwar dem freien Ende 46' des Lappens. Dort weitet sich der Stanzschnitt 47' zu einem Fenster 45'. Die Federzunge 49' ist im Zuge des Herstellungsverfahrens aus dem Blechmaterial etwas ins Innere des U-Querschnitts hineingebogen, wie aus Fig. 12 zu ersehen ist. Dies erfolgt, um in der aus Fig. 14 ersichtlichen Weise eine montierte Anschlußleiste 50' an der Tragschiene 10' zu sichern.

Zur Herstellung der Tragschiene 10' geht man ebenfalls von einem Bandmaterial aus, das entsprechend der beschriebenen Länge des Musterrapports 24 schrittweise in eine mit einem entsprechenden Folgeverbundwerkzeug ausgerüstete Stanze eingeführt und dort zwischen seinen verschiedenen Stationen schrittweise weiterbewegt wird. Dabei erfolgen die randseitigen Konturen 36', 38', die Stanzschnitte 47', 49' und die Ausstanzungen im Bereich des Querspalts 20'. Das Bandmaterial im Bereich des Spalts 20' wird dabei zunächst von einem Steg durchquert. Die beiden U-Schenkel 11', 12' der späteren Tragschiene 10' liegen also in diesem Verfahrensabschnitt zusammen mit dem späteren U-Mittelabschnitt 13' in einer gemeinsamen Ebene 60', die in Fig. 13 strichpunktiert eingezeichnet ist. Für den schrittweisen Vorschub im Rastermaß 24' ist das Bandmaterial mit den bereits erwähnten, bei der fertigen Tragschiene 10' wegfallenden Kantenstreifen versehen, in welchen die Löcher für den Positionsgeber beim Vorschub vorgesehen sind. Die Besonderheit des erfindungsgemäßen Verfahrens liegt nun darin, daß im Zuge einer solchen Längsprofilierung des Bandmaterials zugleich die den späteren U-Querschnitt der Tragschiene 10' bestimmenden Abkantungen 61', 62' in Längsrichtung des Bandmaterials in der letzten Phase des erfindungsgemäßen Verfahrens erfolgen. Diese Abkantungen 61', 62' erfolgen schrittweise, wie anhand der beiden Abschnitte 42', 43' von Fig. 10 erläutert wird, die jeweils von zwei benachbarten Querspalten 20' begrenzt sind.

Die beiden Abschnitte 42', 43' sind zunächst durch den Steg 30' miteinander verbunden, welcher die freigestanzten Querspalte 20' in Längsrichtung des Streifens überbrückt. Das eine Ende 31' des Stegs 30' bleibt fest an der dem einen Abschnitt 43' zugekehrten Kante des Querspalts 20', weshalb es nachfolgend kurz als "Festende" bezeichnet werden soll. Am gegenüberliegenden Brückenende 32' erfolgt eine Scherung, weshalb dieses in den benachbarten Abschnitt 42' eingreift. Bei der Scherung entsteht zunächst ein Formschluß zwischen diesem Brückenende 32' mit einer komplementären Aufnahme 34' im benachbarten Abschnitt 42'. Dieser Formschluß ist aber noch nicht endgültig. Ausgehend von dem in der gemeinsamen Ebene 60' liegenden Bandstreifens wird zunächst die erwähnte Abkantung 62' bezüglich der Längsverlaufsrichtung des Bandmaterials ausgeführt, wo die den späteren Mittelabschnitt 13' und den kurzen Schenkel 11' bildenden Werkstoffstreifen, und zwar in jedem Abschnitt 42' bzw. 43' für sich, umgebogen werden, was abschnittweise auch mehrstufig ablaufen kann.

Betrachtet man den ersten Abschnitt 42, so wird bei dessen Abkantung 62' die Aufnahme 34', quer zur Bandebene 60', bezüglich des Stegs 30'des nachfolgenden Abschnitts 43' abgehoben, wodurch das dortige Brückenende 32' entlang des Scherungsumrisses frei kommt und daher nachfolgend kurz als "Losende" der Brücke bezeichnet werden soll. In ganzer Länge des Querschlitzes 20', der jetzt auch im Bereich des Stegs 30' freiliegt, kann nun die erste Abkantung 62' in diesem Abschnitt 42' erfolgen, ohne daß dies sich zunächst im benachbarten Abschnitt 43' auswirkt. In diesem nächsten Abschnitt 43' erfolgt dies erst im darauffolgenden Arbeitsschritt, wenn dieser Abschnitt 43' im Folgeverbundwerkzeug an diese Stelle der Maschine gelangt ist, an der sich momentan dieser erste Abschnitt 42' befindet. Die entsprechende Abkantung 62' vollzieht sich also im benachbarten Biegeabschnitt 43' um jeweils einen Takt später. Wegen ihrer selbständigen Biegung sollen die jeweils zwischen den beiden Querschlitzen 20' liegenden Abschnitte 42', 43' nachfolgend als "Biegeabschnitte" bezeichnet werden. Der Steg 30' stört bei der entsprechenden Abkantung 62' des benachbarten Biegeabschnitts 43' nicht, weil der vorausgehende Abschnitt 42' zwischenzeitlich in eine nachfolgende Verfahrensstufe dieser Maschine gelangt ist und dort die durch den Abkantungs-Pfeil 61' von Fig. 13 veranschaulichte weite Abbiegung erfährt. Bei dieser zweiten Abkantung 61' wird der den späteren kurzen Schenkel 11' bildende Randstreifen aus der in Fig. 13 ebenfalls eingezeichneten vorläufigen Ebene 63' dieses Zwischenprodukts in einem oder mehreren Verfahrensschritten abgewinkelt.

Im Zuge des Vorschubs gemäß dem Rastermaß 24' gelangt schließlich auch der Biegeabschnitt 43' an jene Stelle der Maschine, wo die geschilderte Abkantung 61' im vorausgehenden Biegeabschnitt 42' vollzogen wurde und erfährt daher dort die entsprechende Behandlung. Dabei kommt es zu einer Wechselwirkung zwischen dem Losende 32' des am zweiten Biegeabschnitt 43' fest sitzenden Stegs 30' und der konformen Aufnahme 34' im vorausgehenden Biegeabschnitt 42'. Der Steg 30' befindet sich im Bereich des kurzen U-Schenkels 11' und ist daher mit dem vorausgehenden Biegeabschnitt 42' erst dann ausgerichtet, wenn auch die Abkantung des entsprechenden U-Schenkels 11' im späteren Biegeabschnitt 43' erfolgt. Das Losende 32' dringt wieder, quer zum Blechmaterial im Biegeabschnitt 42', in die Aufnahme 34' ein und sorgt für den vorausgehenden formschlüssigen Eingriff des Stegs 30'. Zwischen dem Biegeabschnitt 42', 43' liegt eine Verankerung vor, weil zunächst, wie aus Fig. 15 hervorgeht, die Umrisse der Scherung zwischen dem Steg-Losende 32' und seiner Aufnahme 34' einen Hinterschnitt 33' aufweisen. Es liegt eine an einen Schwalbenschwanz erinnernde keilförmige Eingriffsbeziehung bei 33' vor, die man im Tischlergewerbe als "Nut und Feder" bezeichnet. Diese Verankerung wird aber noch weiter gesichert, wenn in einer letzten Verfahrensstufe auf der gleichen Maschine das Steg-Losende 32' noch mit einer durch Strichelungen angedeuteten Prägestanzung 64' unterzogen wird. Bei diesem Prägen versucht das Material des Losendes 32' sich auszudehnen und wird in der Aufnahme 34' des vorausgehenden Biegeabschnitts 42' verspannt. Entsprechendes kann auch geschehen durch eine Bearbeitung des Stegs im Fugenbereich 33'. Ebenso wirken Körnungen oder Verklebungen. Im Endeffekt ist jedenfalls über den Steg 30' eine feste Verbindungen zwischen benachbarten Biegeabschnitten 42', 43' wieder hergestellt, die auch im Bereich der kurzen U-Schenkel 11' für einen Zusammenhalt der Tragschiene 10' sorgt. Alle Arbeitsgänge, vom rohen Bandstreifen bis zur fertigen Tragschiene 10' werden in einem durchgehenden Verfahren auf vorzugsweise ein und derselben Maschine mit entsprechend aufeinanderfolgenden Werkzeugen ausgeführt. Das Abkanten 62', 61' erfolgt somit, wie das Längsprofilieren und Ausschneiden, abschnittweise 42', 43'. Wie aber schon oben erwähnt wurde, kann das Abkanten 61', 62' auch in mehrfachem Rastermaß 24' über mehrere Stanzmusterraporte hinweg erfolgen, weshalb dann die Querspalte 20' in entsprechend doppeltem oder mehrfachem Längenabstand 23' liegen können.

Die fertige Tragschiene kann nun in größeren beliebigen Längen abgezogen werden und gestattet, entsprechend den Bedürfnissen, ein Ablängen, was vorteilhafterweise unter Ausnutzung der bereits über eine Teilbreite durchgehenden Querschlitze 20' erfolgt. In Fig. 10 ist ein solcher Trennschnitt 26' veranschaulicht, der an dieser Kante die entsprechende Aufnahme 34' für die Werkstoffbrücke 30' am zurückbleibenden Teil dieser durchgehenden Tragschiene beläßt. Diese durch Trennschnitte 26' in individuelle Längen gebrachte Tragschiene 10' kann nun paarweise, in zueinander spiegelbildlicher Anordnung, im Inneren einer elektrischen Abschluß- oder Verzweigungseinrichtung unter Verwendung der Befestigungslöcher 25' angebracht werden. Die so angebrachten Tragschienen 10' sind nun bereit, in folgender besonderer Weise mit den Schlußleisten 50' bestückt zu werden.

Die Anschlußleisten 50' sind in ihren beiden Endbereichen 51' zueinander spiegelbildlich gleich ausgebildet, weshalb es in Fig. 14 und 15 genügt, lediglich einen darzustellen. Der Endbereich 51' umfaßt eine abgesetzte Stufe 52', die im Montagefall mit ihrer Unterseite 53' sich an einer zwischen den vorbeschriebenen Laschen 14' des U-Schenkels 11' verlaufenden Anschlagkante 27' abstützt. Die Leiste 50' ist dabei an den einander gegenüberliegenden Längsrändern mit einem übereinstimmenden Paar von Taschen 54' versehen, die jeweils ein Laschenstück 28' der eingangs beschriebenen inneren Stufe 15', 16' zweier gegeneinander gerichteter Hälften der Lasche 14' aufnehmen. Die abgesetzte Stufe 52' der Leiste 50' ist dabei so bemessen, daß die Tasche 54' dann mit dem kurzen U-Schenkel 11' ausgerichtet ist, wenn ihre endseitige Stirnfläche 55' an die Innenfläche des langen U-Schenkels 12' stößt. Dadurch ist die ausgerichtete Lage der Leiste 50' gegen einen Versatz zum U-Schenkel 12' hin gesichert und wird durch den Eingriff des kurzen Schenkels 11' in der Tasche 54' auch in Gegenrichtung festgelegt. Wie Fig. 15 verdeutlicht, brauchen dabei weder der Stufenstoß 15' noch der Stufentritt 16' dieser inneren Stufe mit den entsprechenden Innenflächen der Tasche 54' zusammenzuwirken, weil eine Abstützung bereits über die Anschlagkante 27' zwischen den beiden Laschenhälften 14' zustande kommt. Eine Ausrichtwirkung in Längsverlaufsrichtung der Tragschiene ist bei dieser Montage durch den Stufenstoß 17' der vorbeschriebenen äußeren Stufe 17', 18' gegeben, welche, jeweils spiegelbildlich an den beiden Laschenhälften 14' gegenüber den Leisten-Längsrändern 56' zustande kommt. Die Stufenhöhe 57' an der Leiste 50' ist dabei so bemessen, daß nach dem Abstützen der Leistenunterseite 53' an der schienenseitigen Anschlagkante 27' die Trittfläche 58' dieser Stufe 52' unter der Federzunge 49' zu liegen kommt. Diese Trittfläche 58' wirkt somit als Schulter, die von der Federzunge 49' übergriffen ist und daher die Montagelage der Leiste 50' an der Tragschiene 10' zuverlässig sichert.

Eine Alternative für die Befestigung dieser Leiste 50' besteht darin, dafür im Bereich der abgesetzten Stufe 52' vorgesehene Durchbrüche 59' zu nutzen. Hier können Schrauben od. dgl. durchgeführt werden, um die Leiste 50' ohne Verwendung der beschriebenen Tragschiene 10' unmittelbar im Bodenbereich von elektrischen Abschluß- und Verteilereinrichtungen befestigen zu können. Die so befestigten oder gemäß Fig. 14 und 15 montierten Leisten 50' sind nun bereit, mit den bereits beschriebenen ankommenden Kabeladern 40' bestückt zu werden. An den Längsrändern 56' der Leisten 50' können Schlitzösen 65' gleich mit angespritzt sein, welche eine Positionierung der Kabeladern 40' gestatten, bevor diese in selbstschneidenden Kontakten elektrisch angeschlossen werden. Diese Kontakte befinden sich im Grund von Aufnahmeschlitzen 66' im oberen Bereich der Leiste 50'. Der entsprechende selbstschneidende Gegenkontakt befindet sich in weiteren Aufnahmeschlitzen 66' der Leiste, von denen weitere Kabeladern 41' abgehen, die, wie bereits erwähnt wurde, durch die kunststoffbeschichteten Rangieröffnungen 38' der langen U-Schenkel 12' hindurchgeführt werden.

Um eine Leiste 50' von den Tragschienen 10' zu demontieren, wird das oben beschriebene Fenster 45' im langen Schenkel 12' genutzt. Hier kann ein Werkzeug, z. B. ein Schraubendreher, von der Außenfläche des langen U-Schenkels 12' aus eingeführt werden, der dann zum Abhebeln des federnden Lappens 48' dient und damit zugleich die dort angeformte Federzunge 49' von der oberen Trittfläche 58' der abgesetzten Stufe 52' abzieht. Dadurch wird die ins Innere des U-Profils vorspringende Federzunge 49' in die Ebene des U-Schenkels 12' zurückgeholt und gibt den U-Raum frei, um die endseitige Stirnfläche 55' dieser Stufe 52' an der Federzunge 49' ungehindert emporführen zu können. Bei der vorausgehenden beschriebenen Montage fährt diese Stirnfläche 55' gegen die geneigte Fläche der Federzunge 49', die dabei als Führungsrampe fungiert und die Federzunge 49' selbsttätig zurückdrückt, bis, nach Stützung an der Anschlagkante 27', die freie Kante der Federzunge 59' über die Stufen-Trittfläche 58' schnappen kann.

Bezugszeichenliste:

| | |
|---|---|
| 10 | Tragwanne, Tragprofil |
| 11 | kurzer U-Schenkel |
| 12 | langer U-Schenkel |
| 13 | U-Mittelsteg |
| 14 | Lasche |
| 15 | Rastöffnung |
| 16 | Anschlag für 50 |
| 17 | Durchbruch |
| 18 | Langloch in 13 |
| 19 | Übergang zwischen 11, 13 |
| 20 | Querspalt |
| 21 | Spaltweite von 20 |
| 22 | stufenförmiger Versprung von 20 |
| 23 | Längenabstand zwischen 20, Rastermaß |
| 24 | Stanzmusterrapport, |
| 25 | Abkantung von 11, 12 gegenüber 13 |
| 26 | Biegeabschnitt |
| 27 | benachbarter Biegeabschnitt |
| 28 | Schenkelebene |
| 29 | Beginn des Rasterschritts |
| 30 | Werkstoffbrücke, Zunge |
| 31 | Ansatzstelle für 30 |
| 32 | Zungenende, verbreitertes Kopfstück |
| 33 | äußere Zungenkante |
| 34 | Endkante von 26; 27 |
| 35 | Einschnitt zwischen 30, 11 |
| 36 | Zungen-Anfangsstück |
| 37 | Ausschnitt in 11 |
| 38 | Zungen-Hauptstück |
| 39 | Anfangskante von 26, 27 |
| 40 | Knickstelle von 30 |
| 41 | Faltpfeil von 30 |
| 42 | freier, befestigungsseitiger Zungenabschnitt, Überlappungsbereich |
| 43 | ansatzseitiger Zungenabschnitt |
| 44 | Berührungsstelle für 32, Außenfläche von 11, Überlappungsbereich |
| 45 | Vorlochung in 32 |
| 46 | Nietöffnung in 11                          ) |
| 47 | Innenschräge in 46                          ) Befestigungsstelle |
| 48 | Trichteröffnung von 46                  ) |
| 49 | Hohlniet |
| 50 | Anschlußleiste |
| 51 | Befestigungsstelle, Nietschaft-Umbördelung |

| | |
|---|---|
| 10' | Tragschiene |
| 11' | kurzer U-Schenkel |
| 12' | langer U-Schenkel |
| 13' | U-Mittelabschnitt |
| 14' | Lasche |
| 15' | innere Stufe, Stufenstoß |
| 16' | innere Stufe, Stufentritt |
| 17' | äußere Stufe, Stufenstoß |
| 18' | äußere Stufe, Stufentritt |
| 19' | Stufenumriß von 15 bis 18 |
| 20' | Querspalt |
| 21' | Spaltweite |
| 22' | Fußbereich von 12 |
| 23' | Längenabstand von 20 |
| 24' | Stanzmusterrapport, Rastermaß |
| 25' | Befestigungsloch |
| 26' | Trennschnitt bei 20 |
| 27' | Anschlagkante |
| 28' | Laschenstück |
| 29' | laschenmittige Querschnittebene, Beginn des Rasterschritts |
| 30' | Werkstoffbrücke, Steg |
| 31' | Festende von 30 |
| 32' | Losende von 30 |
| 33' | Hinterschnittkante, Fugenbereich |
| 34' | Aufnahme von 32 |
| 35' | Schenkelzone von 12 |
| 36' | Schlitz von 38 |
| 37' | Scheitelkante von 12 |
| 38' | Rangieröffnung |
| 39' | Randzone von 12 |
| 40' | ankommende Kabel-Adern |
| 41' | abgehende Kabel-Adern |
| 42' | vorderer Biegeabschnitt |
| 43' | nachfolgender Biegeabschnitt |
| 44' | Kunststoffbeschichtung von 39 |
| 45' | Fenster bei 48 |
| 46' | freies Lappenende von 48 |
| 47' | Stanzschnitt für 48 |
| 48' | Lappen |
| 49' | Federzunge in 48 |
| 50' | Anschlußleiste |
| 51' | Endbereich von 50 |
| 52' | abgesetzte Stufe bei 51 |
| 53' | Unterseite von 50 |
| 54' | Tasche bei 56 |
| 55' | endseitige Stirnfläche von 52 |
| 56' | Längsrand von 50 |
| 57' | Stufenhöhe von 52 |
| 58' | Trittfläche von 52 |
| 59' | Durchbruch in 52 |
| 60' | gemeinsame Ebene des Bandmaterials |
| 61' | Abkantung von 11 |
| 62' | Abkantung von 13 |
| 63' | verlängerte Ebene von 13 |
| 64' | Prägestanzung bei 32, 34 |

| | |
|---|---|
| 65' | Schlitzöse von 50 |
| 66' | Aufnahmeschlitz von 50 |

**Patentansprüche**

1. Tragprofil (10 bzw. 10') mit U-förmigem Querschnitt für Anschluß- und/oder Trenn-Leisten (50 bzw. 50') von Kabel-Adern (40', 41') in elektrischen Abschluß- oder Verteilereinrichtungen der Telekommunikationstechnik, wie einer Tragschiene (10') oder einer Tragwanne (10),

   dessen ggf. Stanzausschnitte aufweisende U-Schenkel (11, 12 bzw. 11', 12') profiliert sind, mit den Endbereichen der Leisten (50 bzw. 50') zusammenwirkende Laschen (14 bzw. 14') zum Führen und Halten der Leisten (50 bzw. 50') aufweisen sowie Anschläge (16 bzw. 16') zur Höhenabstützung der Leisten (50 bzw. 50') bilden,

   **dadurch gekennzeichnet,**

   daß in einem Längsabstand (23 bzw. 23'), der dem einfachen oder vielfachen des Stanzmusterrapports (24 bzw. 24') entspricht, ein Querspalt (20 bzw. 20') im Tragprofil (10 bzw. 10') eingestanzt ist,

   der Querspalt (20 bzw. 20') wenigstens den einen U-Schenkel (11, 12 bzw. 11') des Tragprofils (10 bzw. 10') durchtrennt und aufeinanderfolgende Biegeabschnitte (26, 27 bzw. 42', 43') voneinander scheidet, die nur abschnittweise, jeweils selbständig für sich, zum U-Querschnitt fertig abgekantet (25 bzw. 61', 62') werden,

   im Endbereich des einen Biegeabschnitts (26 bzw. 43') eine Werkstoffbrücke (30 bzw. 30') aus dem Material des Tragprofils (10 bzw. 10') mit ausgeschnitten wird

   und die Werkstoffbrücke (30 bzw. 30') vom freigeschnittenen U-Schenkel (11, 12 bzw. 11') des einen Biegeabschnitts (26 bzw. 43') ausgeht, den Querspalt (20 bzw. 20') durchsetzt, mit ihrem freien Brückenende (32 bzw. 32') am Schenkel (11, 12 bzw. 11') des benachbarten Biegeabschnitts (27 bzw. 42') verankert ist und dadurch die beiden, voneinander unabhängig abgekanteten Biegeabschnitte (26, 27 bzw. 42', 43') miteinander verbindet.

2. Tragprofil nach Anspruch 1, dadurch gekennzeichnet, daß der Querspalt (20) beide U-Schenkel (11, 12) durchtrennt und jedem U-Schenkel (11, 12) eine eigene Werkstoffbrücke (30) zugeordnet ist, die aus einer Zunge (30) besteht,

   die Zungen (30) von einer Umrißkante (34) des U-Schenkels (11, 12) ausgehen (Ansatzstelle 31 der Zunge 30), jeweils aus ihrer Schenkelebene (28) heraus umgefaltet (Faltpfeil 41) sind, dabei ihren Querspalt (20) überbrücken und mit ihrem freien Zungenende (32) am U-Schenkel (11, 12) des benachbarten Biegeabschnitts (27) überlappend zur Anlage (Berührungsstelle 44) kommen,

   wobei die freien Zungenenden (32) an ihrem benachbarten U-Schenkel (11, 12) durch eine senkrecht zur Schenkelebene (28) erfolgende Kraftausübung befestigt sind (Befestigungsstelle 46 bis 49 der Zunge 30).

3. Tragprofil nach Anspruch 1 oder 2, dadurch gekennzeichnet, daß der Querspalt (20) in den U-Schenkeln (11, 12) sich bis einschließlich in den Übergang (19) zum U-Mittelsteg (13) des U-Querschnitts erstreckt.

4. Tragprofil nach Anspruch 2 oder 3, dadurch gekennzeichnet, daß die Zunge (30) vor ihrer Faltung (41) sich zunächst im wesentlichen in Verlaufsrichtung des U-Schenkels (11, 12) erstreckt, beim Falten (41) aber gegen den U-Steg (13) des Tragprofils (10) hin umgelegt wird.

5. Tragprofil nach einem oder mehreren der Ansprüche 2 bis 4, dadurch gekennzeichnet, daß die Zunge (30) zwar aus einem im wesentlichen gleichförmigen Streifen besteht, aber an ihrem freien Zungenende in ein verbreitertes, zur Befestigung (46 bis 49) dienendes Kopfstück (32) übergeht.

6. Tragprofil nach einem oder mehreren der Ansprüche 2 bis 5, dadurch gekennzeichnet, daß die Knickstelle (40) beim Umfalten (41) der Zunge (30) den Streifen in zwei bereichsweise übereinanderliegende Zungenabschnitte (42, 43) gliedert, von denen der eine angesetzte Zungenabschnitt (43) in der Schenkelebene (28) verläuft und der andere freie Zungenabschnitt (42) demgegenüber um die Materialstärke der Zunge (30) versetzt ist.

7. Tragprofil nach einem oder mehreren der Ansprüche 2 bis 6, dadurch gekennzeichnet, daß das freie Zungenende (32) an der Außenfläche (44) des benachbarten U-Schenkels (11, 12) zur Anlage kommt.

8. Tragprofil nach einem oder mehreren der Ansprüche 2 bis 7, dadurch gekennzeichnet, daß die zunächst gestreckte Zunge (30) an der Endkante (34) des einen Biegeabschnitts (26) sitzt und ihre äußere Zungenkante (33) zugleich die eine Grenzkante des Querspalts (20) zum benachbarten Biegeabschnitt (27) hin miterzeugt.

9. Tragprofil nach Anspruch 8, dadurch gekennzeichnet, daß an der Ansatzstelle (31) die Zunge (30) durch einen Einschnitt (35) vom übrigen Bereich des U-Schenkels (11, 12) getrennt ist und der Einschnitt (35) die Innenkante der Zunge (30) auf der vom Querspalt (20) abgekehrten Seite begrenzt.

10. Tragprofil nach einem oder mehreren der Ansprüche 1 bis 9, dadurch gekennzeichnet, daß der Querspalt (20, 20') in Längsrichtung des Tragprofils stufenartig (22) verspringt.

11. Tragprofil nach einem oder mehreren der Ansprüche 1 bis 10, dadurch gekennzeichnet, daß die Befestigung des freien Brückenendes (32, 32') am benachbarten U-Schenkel (11, 11') durch eine Schweißung erfolgt.

12. Tragprofil nach einem oder mehreren der Ansprüche 1 bis 10, dadurch gekennzeichnet, daß die Befestigung des freien Brückenendes (32) am benachbarten U-Schenkel (11) durch eine senkrecht zur Schenkelebene (28) erfolgende Werkstoffverformung erzeugt ist, nämlich durch eine Nietung (46 bis 49) einerseits, wobei das Zungenende (32) oder der Anlagebereich (44) zunächst vorgelocht (45) wird und dann das Material in diesem Bereich (32 bzw. 44) auf der gleichen Maschine nach Art eines Hohlniets (49) ausgeformt wird, während andererseits am Anlagebereich (44) oder am Zungenende (32) eine zugehörige Nietöffnung (46) sich befindet.

13. Tragprofil nach Anspruch 12, dadurch gekennzeichnet, daß die Umbördelungen (51) des deformierten Nietschaftendes im Schutz der Nietöffnung (46) angeordnet sind.

14. Tragprofil nach einem oder mehreren der Ansprüche 2 bis 13, dadurch gekennzeichnet, daß die Knickstelle (40) der umgefalteten Zunge (30) unterhalb/höchstens höhengleich mit den Anschlägen (16) zur Höhenabstützung der Anschlußleisten (50) an den U-Schenkeln (11, 12) des Tragprofils (10) angeordnet ist.

15. Tragprofil nach Anspruch 1 oder 2, dadurch gekennzeichnet, daß der Querspalt (20') sowohl den einen U-Schenkel (11') als auch den U-Mittelsteg (13') des Tragprofils (10') durchtrennt und die Werkstoffbrücke aus einem gestreckten Steg (30') besteht,

der Steg (30') zwar von dem auf der einen Seite des Querspalts (20') befindlichen Biegeabschnitt (43') ausgeht (Festende 31' des Stegs 30'), aber mit seinem freien, anderen Stegende (Losende 32' des Stegs 30'), formschlüssig (34') in den gegenüberliegenden Biegeabschnitt (42') eingreift.

16. Tragprofil nach Anspruch 15, dadurch gekennzeichnet, daß das Losende (32') des Stegs (30') und die damit komplementäre Aufnahme (34') im benachbarten Biegeabschnitt (42') hinterschnittene Umrisse (33') aufweisen, die vorzugsweise als keilförmige Nut und Feder gestaltet sind und daß zur Sicherung ihres Eingriffs das Losende (32') in der Aufnahme (34') prägegestanzt (64') ist.

17. Tragprofil nach Anspruch 15 oder 16, dadurch gekennzeichnet, daß der Querspalt (20') eine zum Führen und Halten von Leisten-Endbereichen (51') dienende Lasche (14') vorzugsweise mittig (29') durchsetzt und sich vorzugsweise auch im Fußbereich (22') des angrenzenden anderen U-Schenkels (12') erstreckt.

18. Tragprofil nach einem oder mehreren der Ansprüche 15 bis 17, dadurch gekennzeichnet, daß die beiden U-Schenkel (11', 12') bei einer Tragschiene (10') eine zueinander unterschiedliche Schenkellänge aufweisen, von denen der kurze U-Schenkel (11') die Laschen (14') und Anschläge (27') für die Leisten-Endbereiche (51') und der lange U-Schenkel (12') einstückige, geschlitzte (36') Rangieröffnungen (38') für die Kabel-Adern (41') besitzt, (vergl. Fig. 14, 15).

19. Tragprofil nach Anspruch 18, dadurch gekennzeichnet, daß der lange U-Schenkel (12') in der angrenzenden Schenkelzone (35') Rastmittel (49') zum Sichern der am kurzen U-Schenkel (11') gehalterten Leisten (50') aufweist und die Rastmittel vorzugsweise aus einer aus dem Werkstoff des U-Schenkels (12') herausgeschnittenen Federzunge (49') bestehen, die zum Sichern eine Schulter (58') an der Leiste übergreift, wobei die Federzunge (49') innerer Bestandteil eines gegenläufig aus dem U-Schenkel (12') herausgeschnittenen federnden Lappens (48') ist, (vergl. Fig. 14).

20. Tragprofil nach einem oder mehreren der Ansprüche 15 bis 19, dadurch gekennzeichnet, daß der Endbereich (51') der Leiste (50') eine abgesetzte Stufe (52') aufweist, deren endseitige Stirnfläche (55') im Montagefall an den langen U-Schenkel (12') stößt und deren angrenzende Trittfläche (58') unter der Federzunge (49') liegt, (vergl. Fig. 13).

21. Tragprofil nach einem oder mehreren der Ansprüche 15 bis 20, dadurch gekennzeichnet, daß der Endbereich (51') der Leiste (50') wenigstens eine Tasche (54') aufweist, im Montagefall die Tasche (54') mit dem kurzen U-Schenkel (11') ausgerichtet ist, ein Laschenstück (28') des U-Schenkels (11') haltewirksam in die Tasche (54') eingreift und die Leiste (50') im Montagefall in dem Abstandsbereich (27') zwischen zwei benachbarten Laschen (14') der Tragschiene (10') angeordnet ist, (vergl. Fig. 15).

22. Tragprofil nach einem oder mehreren der Ansprüche 15 bis 21, dadurch gekennzeichnet, daß der Querspalt (20') ein Befestigungsloch (25') im U-Mittelsteg (13') der Tragschiene (10'), vorzugsweise mittig, durchsetzt.

23. Tragprofil nach einem oder mehreren der Ansprüche 1 bis 22, dadurch gekennzeichnet, daß der Rasterschritt der Stanz-Biege- und Abkant-Folge in der Mitte (29') des Querspalts (20, 20') beginnt.

24. Tragprofil nach einem oder mehreren der Ansprüche 1 bis 23, dadurch gekennzeichnet, daß der Querspalt (20, 20') den Trennschnitt (26') zum individuellen Ablängen einer Tragschiene (10') bzw. Tragwanne (10) aus dem kontinuierlichen Tragprofil bestimmt.

FIG. 1

FIG. 2

FIG.3

FIG.4

FIG. 5

FIG. 9

FIG. 6

FIG. 7

FIG. 8

*FIG. 10*

*FIG. 11*

FIG. 12

FIG. 13

FIG. 14

XV

FIG. 15